(19) 

Europäisches
Patentamt

European
Patent Office

Office européen
des brevets

(11)  **EP 1 838 046 A2**

(12) **EUROPEAN PATENT APPLICATION**

(43) Date of publication:
  **26.09.2007 Bulletin 2007/39**

(51) Int Cl.:
  ***H04L 12/28*** (2006.01)

(21) Application number: **07103661.0**

(22) Date of filing: **07.03.2007**

(84) Designated Contracting States:
  **AT BE BG CH CY CZ DE DK EE ES FI FR GB GR HU IE IS IT LI LT LU LV MC MT NL PL PT RO SE SI SK TR**
  Designated Extension States:
  **AL BA HR MK YU**

(30) Priority: **23.03.2006 JP 2006081288**

(71) Applicant: **NEC CORPORATION**
  **Tokyo (JP)**

(72) Inventor: **Mizukoshi, Yasuhiro**
  **Tokyo (JP)**

(74) Representative: **Betten & Resch**
  **Patentanwälte,**
  **Theatinerstrasse 8**
  **80333 München (DE)**

(54) **Band measurement device, band measurement method and computer program**

(57)  A band measurement device that measures a residual idle band available for a wireless LAN communication is provided. A band measurement device (corresponding to one of access points AP1-N) transmits null data corresponding to a virtual idle band and measures a band of actually transmitted null data. Then, the measured band of the null data is determined to be a residual idle band actually available for a wireless LAN communication.

F I G. 1

EP 1 838 046 A2

**Description**

BACKGROUND OF THE INVENTION

Field of the Invention

The present invention relates to a band measurement device, a band measurement method and a computer program that measure an idle band available for a wireless LAN communication.

Description of Related Art

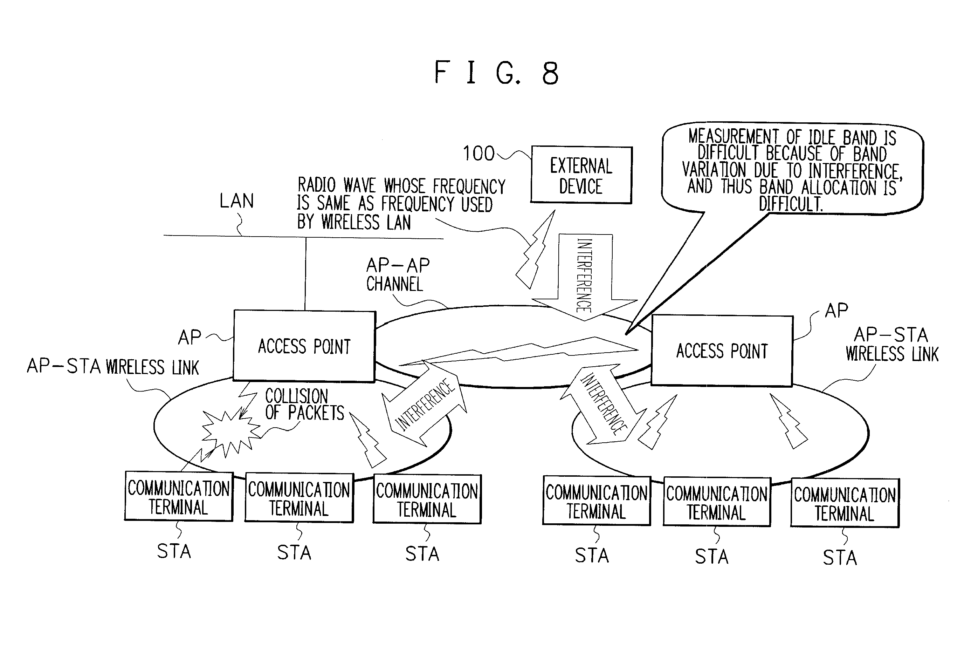

In recent years, as wireless LANs are widely used, there is increasing needs to replace existing communication equipment with wireless LANs to integrate infrastructure for communication.
In order to conduct communication processing that requires QoS (Quality of Service) such as VoIP (Voice over IP), band allocation is one of important factors.
However, since a wireless LAN is operated within an ISM band (Industry Science Medical band), it is susceptible to interference. Because of this, as shown in Fig. 8, a wireless LAN is interfered by an external device 100 that uses a radio wave frequency around 2.4 GHz that is the same frequency as a radio wave used by the wireless LAN, or an interference between adjacent access points (APs) is increased. As a result, a band actually used for wireless communication dynamically varies and it becomes difficult to measure a residual idle band available for wireless communication.
In addition, since a wireless LAN employs a CSMA/CA (Carrier Sense Multiple Access/Collision Avoidance) access method, as shown in Fig. 8, a packet may have to be resent due to collision of packets sent from an access point (AP) and a communication terminal (STA), whereby it becomes difficult to measure a residual idle band available for wireless communication.
Although a method for measuring an idle band using a probe packet has been devised, under a situation where an environmental condition varies widely due to radio interference or the like, it becomes difficult to accurately measure a residual idle band available.
Conventionally, in a wireless LAN, band allocation cannot be performed because of difficulty in measuring a residual idle band due to a band variation caused by interference as described above.
As a technical document filed before the present application, there is a document that discloses a band confirmation device that can be used for enhancing the reliability of a confirmation result of an available band, suppressing the load on a communication network, and constantly monitoring an available band of each customer in a large-scale communication network including many customers (for example, see Japanese Patent Application Laid-Open No. 2002-152205 (document 1)).
In addition, there is a document that discloses a shaping rate setting device that automatically controls a band of an output interface of a communication device in response to a band of a best-effort type network (for example, see Japanese Patent Application Laid Open No. 2004-343227 (document 2)).
In the patent documents cited above, although the techniques and principles for controlling a band used for communications are disclosed, it is not considered to measure a residual idle band available for a wireless LAN communication in a wireless link whose band is unstable as in the wireless LAN.
The present invention is made in view of the above circumstances, and intends to provide a band measurement device, a band measurement method and a computer program that measure a residual idle band available for a wireless LAN communication.

SUMMARY OF THE INVENTION

To achieve such an objective, the present invention has the following characteristics.
A band measurement device is a band measurement device that measures a residual idle band available for a wireless LAN communication, characterized in that it comprises a null data transmission section that transmits null data corresponding to a virtual idle band, and a null data band measuring section that measures a band of the null data actually transmitted by the null data transmission section, wherein the band of the null data measured by the null data band measuring section is determined to be a residual idle band actually available for a wireless LAN communication.
In addition, the band measurement device is characterized in that the null data transmission section identifies a residual band as the virtual idle band, the residual band being obtained by subtraction of a communication band in which the band measurement device actually performs data communication from a band preset in the band measurement device, and transmits null data corresponding to the virtual idle band.
In addition, the band measurement device is characterized in that it comprises a band allocation section that allocates a band based on the band of the null data measured by the null data measuring section.

In addition, the band measurement device is characterized in that the null data transmission section transmits the null data while the data communication in the communication band is prioritized.

In addition, the band measurement device is characterized in that the null data transmission section transmits the null data to a communication device having a MAC address preset in the band measurement device.

In addition, the band measurement device is characterized in that the null data transmission section transmits the null data in unicast to the communication device having the MAC address.

Further, a band measurement method for a band measurement device that measures a residual idle band available for a wireless LAN communication comprises the steps of transmitting null data corresponding to a virtual idle band, measuring a band of the null data actually transmitted by the null data transmitting step, and determining the band of the null data measured by the null data band measuring step to be a residual idle band actually available for a wireless LAN communication.

In addition, the band measurement method is characterized in that the null data transmitting step comprises identifying a residual band as the virtual idle band, the residual band being obtained by subtraction of a communication band in which the band measurement device actually performs data communication from a band preset in the band measurement device, and transmitting null data corresponding to the virtual idle band.

In addition, the band measurement method is characterized in that the band measurement device performs a step of allocating a band based on the band of the null data measured by the null data band measuring step.

In addition, the band measurement method is characterized in that the null data transmitting step comprises transmitting the null data while the data communication in the communication band is prioritized.

In addition, the band measurement method is characterized in that the null data transmitting step comprises transmitting the null data to a communication device having a MAC address preset in the band measurement device.

In addition, the band measurement method is characterized in that the null data transmitting step comprises transmitting the null data in unicast to the communication device having the MAC address.

Further, a computer program is a band measurement program for a band measurement device that measures a residual idle band available for a wireless LAN communication, causes the band measurement device to perform a process for transmitting null data corresponding to a virtual idle band, a process for measuring a band of the null data actually transmitted by the null data transmitting process, and a process for determining the band of the null data measured by the null data band measuring process to be a residual idle band actually available for a wireless LAN communication.

In addition, the computer program is characterized in that the null data transmitting process identifies a residual band as the virtual idle band, the residual band being obtained by subtraction of a communication band in which the band measurement device actually performs data communication from a band preset in the band measurement device, and transmits null data corresponding to the virtual idle band.

In addition, the computer program causes the band measurement device to perform a process for allocating a band based on the band of the null data measured by the null data band measuring process.

In addition, the computer program is characterized in that the null data transmitting process transmits the null data while the data communication in the communication band is prioritized.

In addition, the computer program is characterized in that the null data transmitting process transmits the null data to a communication device having a MAC address preset in the band measurement device.

In addition, the computer program is characterized in that the null data transmitting process transmits the null data in unicast to the communication device having the MAC address.

Advantageous features of the embodiments are that null data corresponding to a virtual idle band is transmitted, and a band of the null data actually transmitted is determined to be a residual idle band actually available for a wireless LAN communication. This allows a residual idle band available for a wireless LAN communication to be measured in a wireless link whose band is unstable as in the wireless LAN communication.

BRIEF DESCRIPTION OF THE DRAWINGS

The objectives and features of the present embodiments will become more apparent from the consideration of the following detailed description taken in conjunction with the accompanying drawings, in which:

Fig. 1 is a diagram that shows a system configuration of a wireless communication system;
Fig. 2 is a diagram that shows an internal configuration of an access point (AP1-N) that constitutes the wireless communication system;
Fig. 3 is a first diagram that illustrates operations in the wireless communication system, and particularly illustrates communication processing for a channel between access points (AP1 and AP2);
Fig. 4 is a diagram that illustrates a case where the access points (AP1, AP2) transmit null data to a channel;
Fig. 5 is a second diagram that illustrates operations in the wireless communication system, and particularly illustrates communication processing for a wireless link between the first access point (AP1) and communication terminals (STAI-3);

Fig. 6 is a first diagram that illustrates a case where the access point (AP1) transmits null data to a wireless link;

Fig. 7 is a second diagram that illustrates a case where the access point (AP1) transmits null data to a wireless link; and

Fig. 8 is a diagram that illustrates a problem of the wireless communication system.

DESCRIPTION OF THE PREFERRED EMBODIMENTS

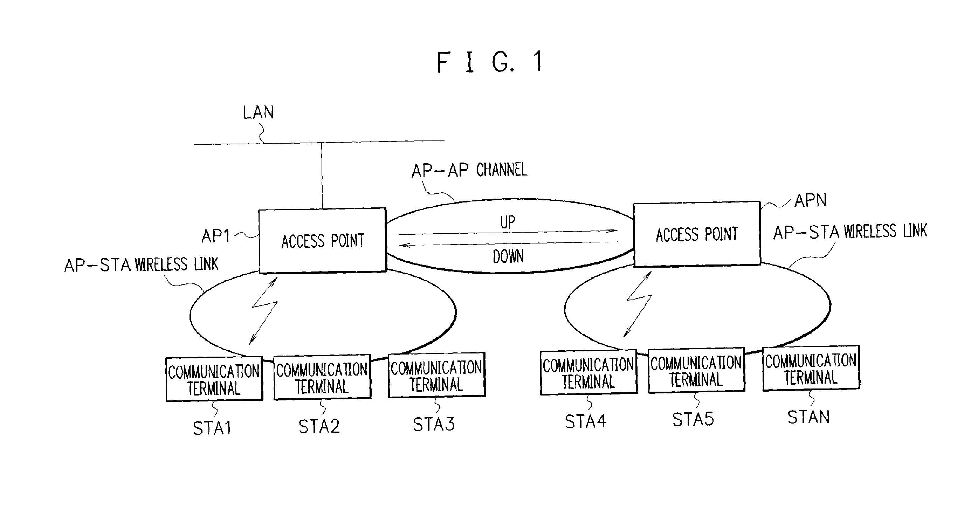

At first, a feature of a wireless communication system according to the present embodiment will be described with reference to Fig. 1.

A wireless communication system comprises a plurality of band measurement devices (corresponding to access points AP1-N, where N is any integer) and a plurality of communication terminals (STA1-N). The band measurement devices (AP1-N) are characterized by transmitting null data corresponding to a virtual idle band and measuring a band of the actually transmitted null data, and then determining the measured band of the null data to be a residual idle band actually available for a wireless LAN communication. This allows a residual idle band to be measured in a wireless link whose band is unstable as in the wireless LAN. Hereinafter, the wireless communication system according to the embodiments will be described with reference to the accompanying drawings.

A configuration of a wireless communication system will first be described with reference to Fig. 1.

The wireless communication system comprises a plurality of access points (AP1-N, where N is any integer) and a plurality of communication terminals (STA1-N). Additionally, the access points (AP1-N) and the communication terminals (STA1-N) send and receive information each other through a wireless link. Between the access points (AP1-N), information is sent and received through a channel. Additionally, a communication device capable of wireless communication such as a portable telephone, a PDA (Personal Digital Assistance), and a PC (Personal Computer) may be applied to the communication terminals (STA1-N).

<Access points AP1-N>

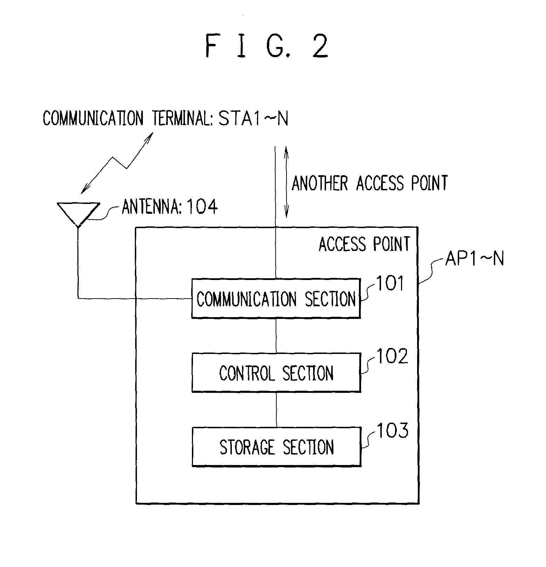

An internal configuration of an access point (AP1-N) will next be described with reference to Fig. 2.

As shown in Fig. 2, an access point (AP1-N) comprises a communication section 101, a control section 102, a storage section 103, and an antenna 104.

The communication section 101 establishes a wireless link with communication terminals (STA1-N) through an antenna 104 to send and receive information at a certain frequency. In addition, the communication section 101 sends and receives information to and from another access point through a channel. The control section 102 centrally controls the internal components of the access point. The storage section 103 stores various kinds of set values of the access point and temporarily stores information sent or received through the communication section 101. The various kinds of set values stored in the storage section 103 includes a maximum band of a wireless link, a wireless channel, a Service Set Identifier (SSID), and the like that are required when wireless communication is performed.

Additionally, an access point (AP1-N) sends and receives null data besides normal data.

Processing operations in the wireless communication system will be described below.

<Communication processing in a channel between access points (AP1-N)>

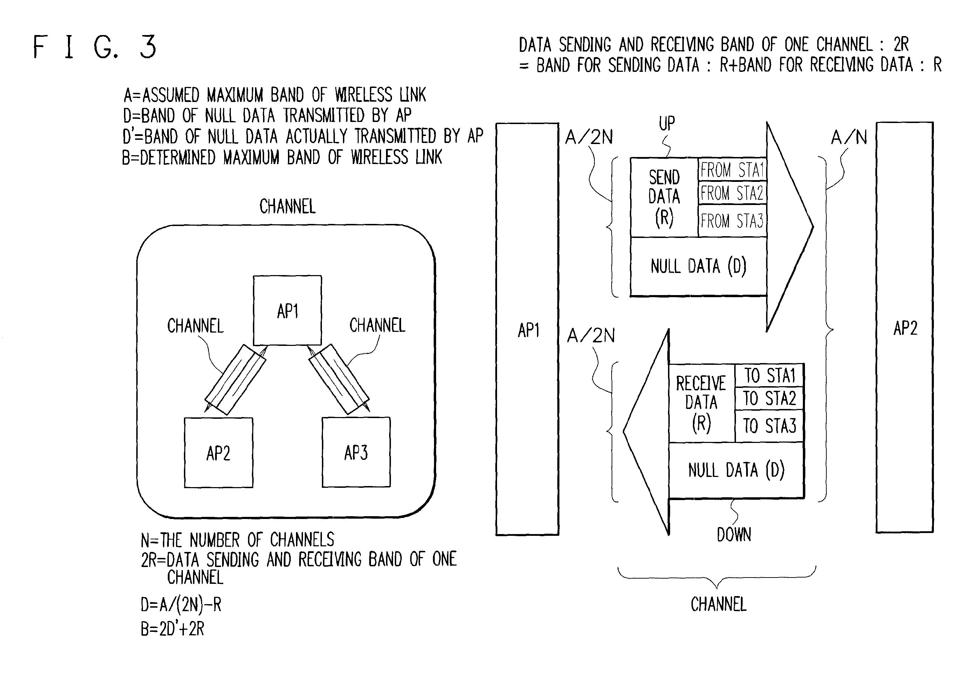

At first, processing between the access points (AP1-N) will be described with reference to Fig. 3. Since the same communication processing is performed between access points, only the processing between a first access point (AP1) and a second access point (AP2) will be described in the following description.

Initially, a set band A of a link of the access points (AP1, AP2) is preset. The set band A is set by a receive signal strength indicator (RSSI) of a radio wave received from a communication terminal or an administrator who administrates each access point (AP1, AP2). Because of this, a set band A of a link set in the access points (AP1, AP2) will be different from an actually available maximum band.

When there are N channels routed through the first access point (AP1), and a communication band of data actually being transmitted by the first access point (AP1) is defined as R, a virtual null data band D in which the first access point (AP1) can transmit null data to a channel between the access points (AP1 and AP2) is calculated by the following equation (1):

$$\text{Virtual null data band: } D = (A/2N) - R \quad \dots (1)$$

(where A is set band (set value) of a link in the first access point (AP1), N is the number of channels, R is communication band of data actually being transmitted by the first access point (AP1).)

Further, the first access point (AP1) notifies the number of current channels N to the second access point (AP2). This allows the second access point (AP2) to know the number of channels N of the adjacent first access point (AP1).

The first access point (AP1) transmits null data of the virtual null data band D to the second access point (AP2) while actual data transmission of the communication band R is prioritized.

In addition, by measuring a band of the null data D' actually transmitted to the second access point (AP2), the access point (AP1) can calculates a maximum band B actually available for a channel between the access points (AP1 and AP2) by the following equation (2):

$$\text{Maximum band: } B = 2D' + 2R.$$

Thereby, the first access point (AP1) determines that the actually available maximum band B is 2D' + 2R in the channel between the access points (AP1 and AP2), and determines that a band that can be allocated to wireless communication by the first access point (AP1) is 2D'. In addition, the second access point (AP2) also performs a similar process to the above process of the first access point (AP1).

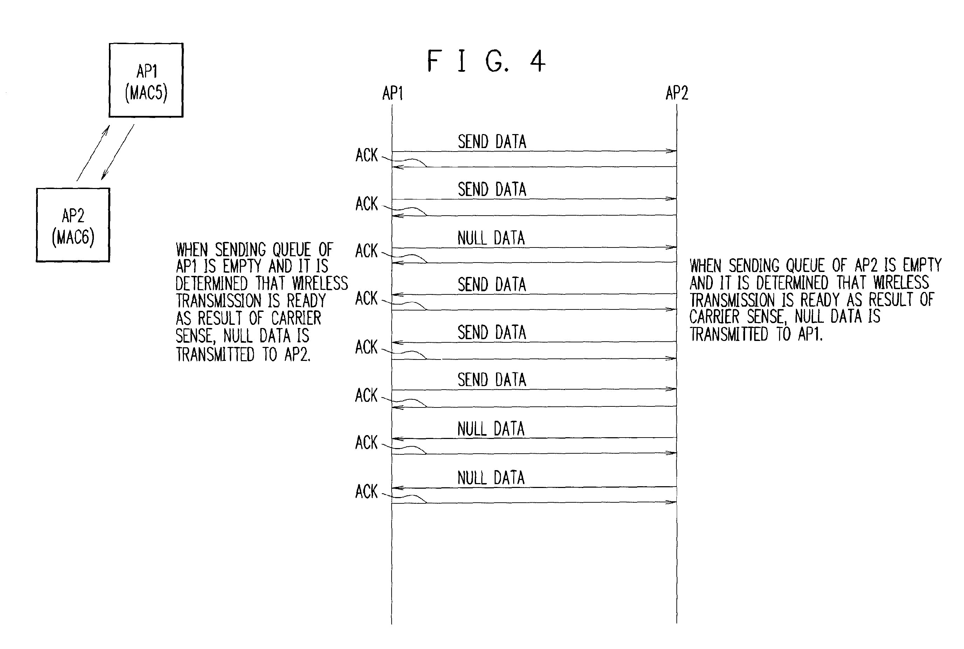

As shown in Fig. 4, in order for the first access point (AP1) and the second access point (AP2) to transmit null data, null data is transmitted when a sending queue of an access point (AP) is empty and wireless transmission proves to be ready after a carrier sense procedure.

<Communication processing in a wireless link between the first access point (AP1) and communication terminals (STA1-3)>

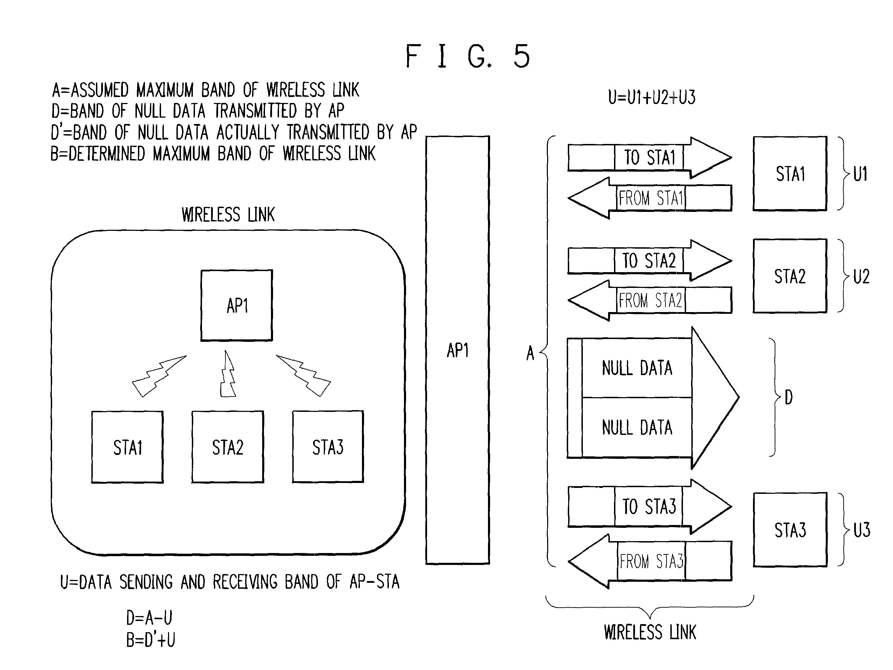

Communication processing between the first access point (AP1) and communication terminals (STA1-3) will next be described with reference to Fig. 5. A band of a link A in the first access point (AP1) is here assumed to be preset.

At first, when a communication band of data actually sent and received between the first access point (AP1) and communication terminals (STA1-3) currently connected thereto is defined as U (U = U1 + U2 + U3, where U1 is a communication band of data actually being sent and received between the first access point (AP1) and a communication terminal (1-1), U2 is a communication band of data actually being sent and received between the first access point (AP1) and a communication terminal (1-2), U3 is a communication band of data actually being sent and received between the first access point (AP1) and a communication terminal (1-3)), a virtual null data band D in which the first access point (AP1) can transmit null data to a wireless link is calculated by the following equation (3):

$$\text{Virtual null data band: } D = A - U \ldots (3),$$

where A is a band (value) of link in the first access point (AP1), and U is a communication band of data actually being sent and received by the first access point (AP 1).

The first access point (AP1) transmits null data of the virtual null data band D to a communication device having a pre-assigned MAC address while prioritizing sending and receiving of actual data of the communication band U.

In addition, by measuring a band of the null data D' actually transmitted to the communication device having the pre-assigned MAC address, the access point (AP1) calculates a maximum band B actually available for a wireless link of the first access point (AP1) by the following equation (4):

$$\text{Maximum band of wireless link: } B = D' + U. \qquad \ldots (4)$$

Thereby, the first access point (AP1) determines that the maximum band B actually available for the channel of the first access point (AP1) is D' + U and, determines that a band that is actually allocated to wireless communication by the first access point (AP1) is D'.

Since, as described above, the first access point (AP1) transmits null data corresponding to the virtual idle band D to a communication device having a pre-assigned MAC address and measures a band D' of null data actually transmitted to the communication device having the pre-assigned MAC address whereby the first access point (AP1) can measure a band D' that can be actually allocated to wireless communication by the first access point (AP1), and a band D' that can be actually allocated to wireless communication by the first access point (AP1) can be easily measured in wireless communication of CSMA/CA type communication method.

Further, since the first access point (AP1) transmits null data corresponding to the virtual idle band D to a communication device having a pre-assigned MAC address and measures a band D' of null data actually transmitted to the communication device having the pre-assigned MAC address, the first access point (AP1) measures the band D' that is actually allocated to wireless communication using existing communication terminals (STA1-3).

Additionally, the first access point (AP1) transmits null data in unicast mode, broadcast mode, multicast mode, or the like. Since the unicast mode allows data to be transmitted with high data rate modulation, the first access point (AP1) preferably transmits null data in unicast to a communication device having a pre-assigned MAC address. This allows a band D' of null data actually transmitted by the first access point (AP1) to be measured accurately.

In addition, in the wireless communication system, the access point (AP1) continues to transmit null data corresponding to an actually allocatable band D', and the access point (AP1) transmitting the null data is controlled to allocate a band when the band is needed to be allocated to a certain session.

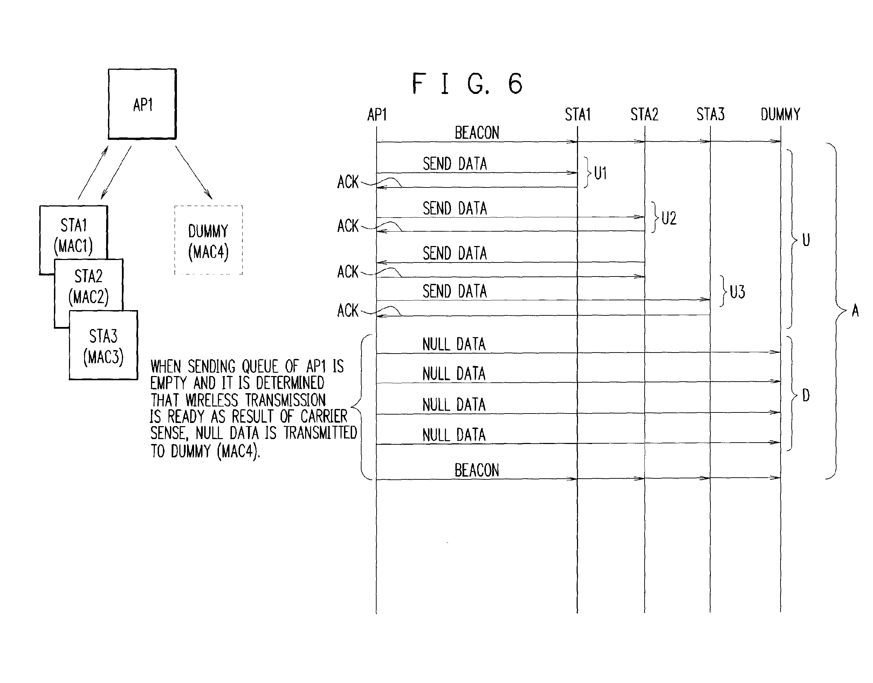

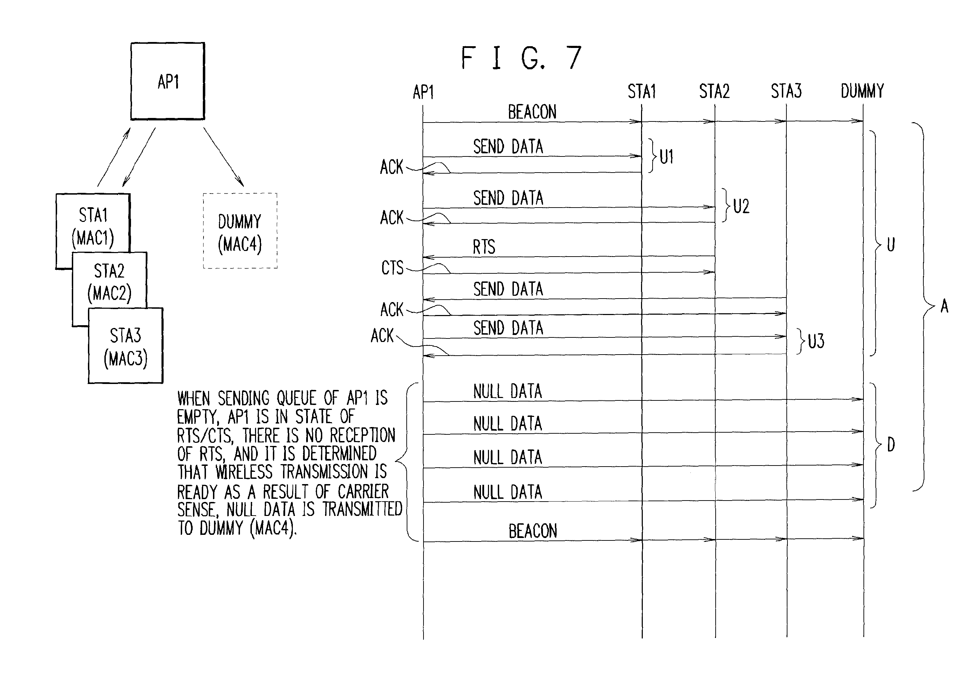

As shown in Fig. 6, in order for the first access point (AP 1) to transmit null data, null data is transmitted to a communication device having a pre-assigned MAC address (MAC 4) when a sending queue of the first access point (AP1) is empty and wireless transmission proves to be ready after a carrier sense procedure. Additionally, as shown in Fig. 7, null data is transmitted to a communication device having a pre-assigned MAC address (MAC 4) when a sending queue of the first access point (AP1) is empty, the first access point (AP1) is in a state of RTS (Request To Send)/CTS (Clear To Send), there is no reception of RTS, and wireless transmission proves to be ready after carrier sensing.

The above embodiment is the preferred embodiments and does not intend to limit the scope of the present invention only to the above embodiment. Therefore various modifications may be made without departing from the spirit and scope of the present invention.

For example, the above control operations in the access point (AP1-N) may be performed by software such as a computer program instead of a hardware configuration, and the control operations may be performed in the access points (AP1-N) by a program on a recording medium such as an optical recording medium, a magnetic recording medium, a magneto-optical recording medium, or a semiconductor, and loading the program from the recording medium into the access points (AP1-N). Additionally, the control operations may be performed in the access points (AP1-N) by loading the program from an external device connected thereto through a predetermined network into the access points (AP1-N).

An embodiment of the present invention may be summarized as a band measurement device that measures a residual idle band available for a wireless LAN communication, wherein the band measurement device corresponding to one of access points AP1-N transmits null data corresponding to a virtual idle band and measures the band of actually transmitted null data. Then, the measured band of the null data is determined to be a residual idle band actually available for a wireless LAN communication.

**Claims**

1. A band measurement device that measures a residual idle band available for a wireless LAN communication, comprising:

   a null data transmission section that transmits null data corresponding to a virtual idle band; and
   a null data band measuring section that measures a band of the null data actually transmitted by the null data transmission section,

   wherein the band of the null data measured by the null data band measuring section is determined to be a residual idle band actually available for a wireless LAN communication.

2. The band measurement device according to claim 1, wherein the null data transmission section identifies a residual band as the virtual idle band, the residual band being obtained by subtraction of a communication band in which the band measurement device actually performs data communication from a band preset in the band measurement device, and transmits null data corresponding to the virtual idle band.

3. The band measurement device according to claim 1 or 2, comprising a band allocation section that allocates a band based on the band of the null data measured by the null data measuring section.

4. The band measurement device according to claim 2, wherein the null data transmission section transmits the null data while the data communication in the communication band is prioritized.

**5.** The band measurement device according to one of claims 1 to 4, wherein the null data transmission section transmits the null data to a communication device having a MAC address preset in the band measurement device.

**6.** The band measurement device according to claim 5, wherein the null data transmission section transmits the null data in unicast to the communication device having the MAC address.

**7.** A band measurement method for a band measurement device that measures a residual idle band available for a wireless LAN communication, comprising the steps of:

transmitting null data corresponding to a virtual idle band;
measuring a band of the null data actually transmitted by the null data transmitting step; and
determining the band of the null data measured by the null data band measuring step to be a residual idle band actually available for a wireless LAN communication.

**8.** The band measurement method according to claim 7, wherein the null data transmitting step comprises identifying a residual band as the virtual idle band, the residual band being obtained by subtraction of a communication band in which the band measurement device actually performs data communication from a band preset in the band measurement device, and transmitting null data corresponding to the virtual idle band.

**9.** The band measurement method according to claim 7 or 8, wherein the band measurement device performs a step of allocating a band based on the band of the null data measured by the null data band measuring step.

**10.** The band measurement method according to claim 8 or 9, wherein the null data transmitting step comprises transmitting the null data while the data communication in the communication band is prioritized.

**11.** The band measurement method according to one of claims 7 to 10, wherein the null data transmitting step comprises transmitting the null data to a communication device having a MAC address preset in the band measurement device.

**12.** The band measurement method according to claim 11, wherein the null data transmitting step comprises transmitting the null data in unicast to the communication device having the MAC address.

**13.** A computer program for a band measurement device that measures a residual idle band available for a wireless LAN communication, the computer program causing the band measurement device to perform:

a process for transmitting null data corresponding to a virtual idle band;
a process for measuring a band of the null data actually transmitted by the null data transmitting process; and
a process for determining the band of the null data measured by the null data band measuring process to be a residual idle band actually available for a wireless LAN communication.

**14.** The computer program according to claim 13, wherein the null data transmitting process identifies a residual band as the virtual idle band, the residual band being obtained by subtraction of a communication band in which the band measurement device actually performs data communication from a band preset in the band measurement device, and transmits null data corresponding to the virtual idle band.

**15.** The computer program according to claim 13 or 14, causing the band measurement device to perform a process for allocating a band based on the band of the null data measured by the null data band measuring process.

**16.** The computer program according to claim 14 or 15, wherein the null data transmitting process transmits the null data while the data communication in the communication band is prioritized.

**17.** The computer program according to one of claims 13 to 16, wherein the null data transmitting process transmits the null data to a communication device having a MAC address preset in the band measurement device.

**18.** The computer program according to claim 17, wherein the null data transmitting process transmits the null data in unicast to the communication device having the MAC address.

# F I G. 1

EP 1 838 046 A2

# F I G. 2

COMMUNICATION TERMINAL: STA1~N

ANOTHER ACCESS POINT

ANTENNA: 104

ACCESS POINT

AP1~N

COMMUNICATION SECTION — 101

CONTROL SECTION — 102

STORAGE SECTION — 103

FIG. 3

# F I G. 4

AP1
(MAC5)

AP2
(MAC6)

AP1                                                              AP2

WHEN SENDING QUEUE OF
AP1 IS EMPTY AND IT IS
DETERMINED THAT WIRELESS
TRANSMISSION IS READY
AS RESULT OF CARRIER
SENSE, NULL DATA IS
TRANSMITTED TO AP2.

WHEN SENDING QUEUE OF AP2 IS EMPTY
AND IT IS DETERMINED THAT WIRELESS
TRANSMISSION IS READY AS RESULT OF
CARRIER SENSE, NULL DATA IS
TRANSMITTED TO AP1.

SEND DATA
ACK

SEND DATA
ACK

NULL DATA
ACK

SEND DATA
ACK

SEND DATA
ACK

SEND DATA
ACK

NULL DATA
ACK

NULL DATA
ACK

EP 1 838 046 A2

# F I G. 5

A=ASSUMED MAXIMUM BAND OF WIRELESS LINK
D=BAND OF NULL DATA TRANSMITTED BY AP
D'=BAND OF NULL DATA ACTUALLY TRANSMITTED BY AP
B=DETERMINED MAXIMUM BAND OF WIRELESS LINK

U=U1+U2+U3

WIRELESS LINK

U=DATA SENDING AND RECEIVING BAND OF AP-STA

$$D=A-U$$
$$B=D'+U$$

WIRELESS LINK

AP1

STA1
(MAC1)

STA2
(MAC2)

STA3
(MAC3)

DUMMY
(MAC4)

WHEN SENDING QUEUE OF AP1 IS EMPTY AND IT IS DETERMINED THAT WIRELESS TRANSMISSION IS READY AS RESULT OF CARRIER SENSE, NULL DATA IS TRANSMITTED TO DUMMY (MAC4).

AP1    STA1    STA2    STA3    DUMMY

BEACON

SEND DATA   }U1
ACK

SEND DATA   }U2
ACK

SEND DATA
ACK

SEND DATA   }U3
ACK

NULL DATA

NULL DATA

NULL DATA

NULL DATA

BEACON

U

D

A

EP 1 838 046 A2

# F I G. 7

A

U

D

DUMMY

STA3

}U3

STA2

}U2

STA1

}U1

AP1

BEACON

SEND DATA — ACK
SEND DATA — ACK
RTS — CTS
SEND DATA — ACK
SEND DATA — ACK
NULL DATA
NULL DATA
NULL DATA
NULL DATA
BEACON

WHEN SENDING QUEUE OF AP1 IS EMPTY, AP1 IS IN STATE OF RTS/CTS, THERE IS NO RECEPTION OF RTS, AND IT IS DETERMINED THAT WIRELESS TRANSMISSION IS READY AS A RESULT OF CARRIER SENSE, NULL DATA IS TRANSMITTED TO DUMMY (MAC4).

AP1

STA1 (MAC1)
STA2 (MAC2)
STA3 (MAC3)

DUMMY (MAC4)

14

# F I G. 8

MEASUREMENT OF IDLE BAND IS DIFFICULT BECAUSE OF BAND VARIATION DUE TO INTERFERENCE, AND THUS BAND ALLOCATION IS DIFFICULT.

100

EXTERNAL DEVICE

LAN

RADIO WAVE WHOSE FREQUENCY IS SAME AS FREQUENCY USED BY WIRELESS LAN

AP—AP CHANNEL

INTERFERENCE

AP

AP—STA WIRELESS LINK

ACCESS POINT

ACCESS POINT

AP

AP—STA WIRELESS LINK

COLLISION OF PACKETS

INTERFERENCE

INTERFERENCE

COMMUNICATION TERMINAL

COMMUNICATION TERMINAL

COMMUNICATION TERMINAL

COMMUNICATION TERMINAL

COMMUNICATION TERMINAL

COMMUNICATION TERMINAL

STA

STA

STA

STA

STA

STA

EP 1 838 046 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002152205 A
- JP 2004343227 A